# EUROPEAN PATENT SPECIFICATION

(11) **EP 2 639 875 B1**
(45) Date of publication and mention of the grant of the patent: **21.01.2015**
(21) Application number: 13158570.5
(22) Date of filing: 11.03.2013
(51) Int. Cl.: H01M 8/06, H01M 8/04, H01M 8/24, F23C 5/02

(54) **Fuel cell apparatus**
Brennstoffzellenvorrichtung
Dispositif de pile à combustible

(30) Priority: 12.03.2012 JP 2012055032
(43) Date of publication of application: 18.09.2013
(73) Proprietor: AISIN SEIKI KABUSHIKI KAISHA, Kariya-shi, Aichi 448-8650 (JP); KYOCERA CORPORATION, Kyoto-shi, Kyoto 612-8501 (JP)
(72) Inventor: Endo, Satoshi, Kariya-shi,, Aichi 448-8650 (JP)
(74) Representative: TBK

(56) References cited:
- EP-A1- 1 536 126
- JP-A- 2004 155 629
- JP-A- 2009 087 540
- US-A- 4 323 088

## Description

### TECHNICAL FIELD

This disclosure generally relates to a fuel cell apparatus.

### BACKGROUND DISCUSSION

A known fuel cell apparatus is disclosed in JP2008-66127A (which is hereinafter referred to as Patent reference 1). According to the known fuel cell apparatus disclosed in Patent reference 1, a predetermined space is provided above a stack including plural cells, and a reformer for generating hydrogen that is necessary for power generation is arranged at the predetermined space above the stack. According to the known fuel cell apparatus disclosed in Patent reference 1, a fuel gas that was not used for the power generation (that is, an off-gas) and air (that is, an off air) are combusted at the predetermined space, and thermal energy that is necessary for a reforming reaction is supplied to the reformer. According to the known fuel cell apparatus, at a fixing portion where a power generation stack and the reformer are accommodated, heat exchange is conducted between an exhaust combustion gas and air, that is, the air immediately before the air being used for the power generation, and thus the air is preheated to a predetermined temperature.

A known fuel cell is disclosed in JP2009-87540A (which is hereinafter referred to as Patent reference 2). The known fuel cell disclosed in Patent reference 2 is provided with a stack including plural cells, and a reformer arranged above the stack. According to the known fuel cell, a member which is formed in an arm-like configuration and restricts a position of the reformer in an up-down direction is arranged at a side that is opposite to a pipe connecting the stack and the reformer to each other. According to the known fuel cell disclosed in Patent reference 2, the member is arranged between the reformer and a manifold of the stack, and defines the position of the reformer in the up-down direction.

According to Patent references 1 and 2, in a power generation operation, the reformer is heated to a high temperature range by combustion flame of a combusting portion, and therefore the reformer elongates or extends in a lengthwise direction thereof due to a thermal expansion. Thus, a load may be generated at the reformer as the thermal expansion occurs. In some cases, the reformer may have portions at which stress is concentrated. This may be unfavorable to durability and a longer life of the reformer.

A need thus exists for a fuel cell apparatus which absorbs a thermal expansion occurring at a reformer that is heated to a high temperature in association with a power generation operation, and which contributes to enhancement of durability and a longer life of the reformer.

Apart from that, there is known a gas production apparatus for use in a fuel cell power generation system, comprising a reformer, a combusting portion, and an evacuated insulating container surrounding the reformer, the combusting portion and optionally a fuel cell stack if included (JP 2004-155629 A). Inlet and outlet pipes are welded to a first end portion of the reformer in a lengthwise direction thereof and to a top lid of the insulating container. A second end portion of the reformer in the lengthwise direction thereof is in the shape of a projection and placed in a gap of a receiving guide provided on a bottom surface of the evacuated insulating container in such a manner as to be relatively displaceable in the lengthwise direction of the reformer in association with a displacement of the second end portion which occurs in association with a thermal expansion of the reformer in the lengthwise direction.

### SUMMARY

According to an aspect of this disclosure, a fuel cell apparatus includes the features defined in claim 1.

According to the configuration defined in claim 1, the first end portion of the reformer in the lengthwise direction is fixed to the part of the fixing portion at the welded portion or by means of the fixture. Thus, for example, when the fuel cell apparatus is assembled or transported, the reformer is restricted from moving unnecessarily and therefore the reformer is restricted from coming off and falling down. Further, because the first end portion of the reformer in the lengthwise direction is fixed to the part of the fixing portion at the welded portion or by means of the fixture, a displacement of the first end portion which is associated with the thermal expansion is restrained from occurring. The second end portion of the reformer in the lengthwise direction is placed at the placement surface of the heat insulating wall. Thus, in a case where the reformer is relatively displaced in the lengthwise direction of the reformer in association with the thermal expansion, the relative displacement is absorbed. Consequently, a load acting on the reformer is reduced. In this case, stress concentration associated with the thermal expansion is restricted at the reformer. Thus, durability of the reformer may be enhanced and a life of the reformer may be increased.

Further, because the first clearance is provided, the thermal expansion of the second end portion of the reformer is permitted within a range of a clearance width of the first clearance. However, in a case where the reformer is excessively displaced in the horizontal direction due to the thermal expansion, the lateral-facing restraining surface restrains the excessive relative displacement.

According to another aspect of this disclosure, the heat insulating wall faces, in a height direction of the reformer, an upper surface of the second end portion of the reformer in the lengthwise direction thereof and the heat insulating wall includes a down-facing restraining surface for restraining the upper surface of the second end portion in the height direction.

According to the above described configuration, even in a case where the reformer is relatively displaced in the height direction in association with the thermal expansion, the down-facing restraining surface restrains the relative displacement.

According to an aspect of this disclosure, a second clearance is provided between the upper surface of the second end portion of the reformer and the down-facing restraining surface of the heat insulating wall in the height direction of the reformer, and the second clearance is configured to absorb a displacement of the second end portion of the reformer in the height direction which occurs in accordance with the thermal expansion of the second end portion of the reformer.

According to the above described configuration, because the second clearance is provided as described above, the thermal expansion of the second end portion of the reformer is permitted within a range of a clearance width of the second clearance. However, in a case where the reformer is excessively displaced in the height direction due to the thermal expansion, the down-facing restraining surface restrains the excessive relative displacement.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a vertical cross-sectional view schematically illustrating an internal configuration of a fuel cell apparatus according to a first embodiment disclosed here;
Fig. 2 is a cross-sectional view schematically illustrating the internal configuration of the fuel cell apparatus according to the first embodiment disclosed here;
Fig. 3 is a vertical cross-sectional view schematically illustrating an internal configuration of a fuel cell apparatus according to a second embodiment disclosed here;
Fig. 4 is a cross-sectionai view schematically illustrating an internal configuration of a fuel cell apparatus according to a third embodiment disclosed here;
Fig. 5 is a cross-sectional view schematically illustrating an internal configuration of a fuel cell apparatus according to a fourth embodiment disclosed here;
Fig. 6 is a vertical cross-sectional view schematically illustrating a configuration where a second end portion of a reformer is placed, according to a fifth embodiment disclosed here;
Fig. 7 is a vertical cross-sectional view schematically illustrating a configuration where a second end portion of a reformer is placed on a placement surface, according to a sixth embodiment disclosed here;
Fig. 8 is a vertical cross-sectional view schematically illustrating a configuration where a second end portion of a reformer is placed on a placement surface, according to a seventh embodiment disclosed here;
Fig. 9 is a vertical cross-sectional view schematically illustrating a configuration where a second end portion of a reformer is placed on a placement surface, according to an eighth embodiment disclosed here; and
Fig. 10 is a system diagram schematically illustrating a concept of the fuel cell apparatus according to a first form of application in which the embodiments are applied.

### DETAILED DESCRIPTION

A fuel cell apparatus includes a reformer arranged to extend in a lengthwise direction thereof, a combusting portion forming a combusting space in which combustion flame for heating up the reformer is generated, a stack, a heat insulating wall surrounding the reformer and the stack, and a fixing portion made of metal and arranged along the heat insulating wall. The heat insulating wall is made of heat insulating material having a heat insulation property. Any types of reformer may be used as long as the reformer generates an anode gas including or containing hydrogen. The reformer extends in the lengthwise direction. Examples of the material of the heat insulating wall include alumina-based material, silica-based material, magnesia-based material, zirconia-based material, silicon carbide-based material and silicon nitride-based material. Fiber material such as reinforcement fiber including, for example, alumina fiber and/or silica fiber may be included when needed. The heat insulating wall may be porous. Examples of the fixing portion include a housing, however, a simple fixing plate may be used as the fixing portion.

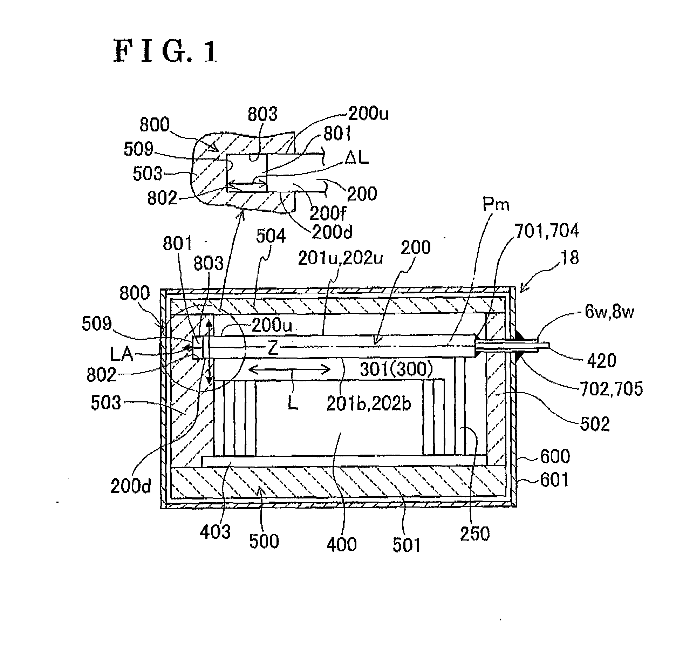

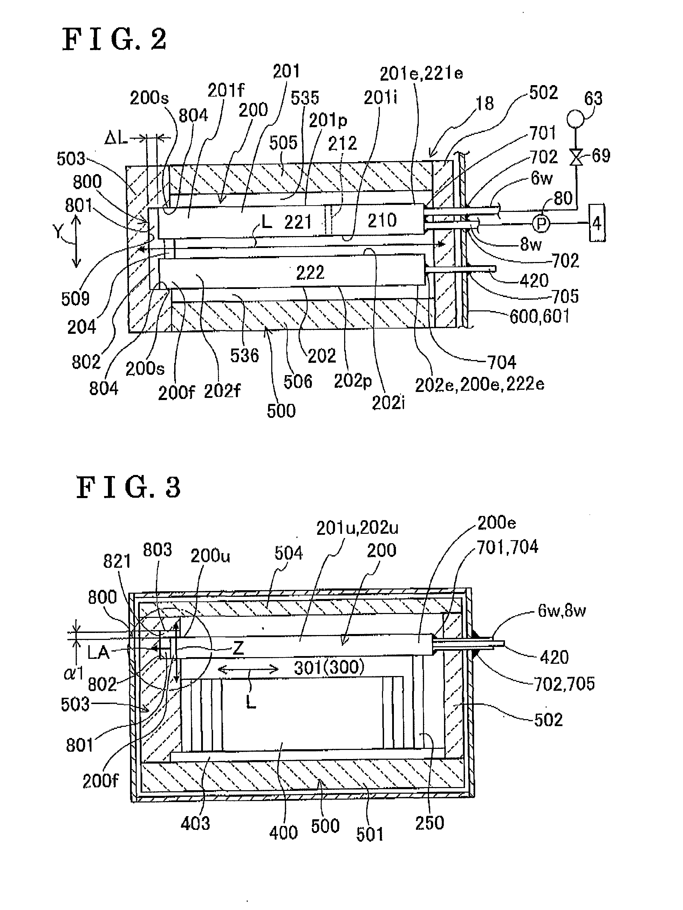

A first embodiment disclosed here will be explained hereunder. Each of Figs. 1 and 2 schematically illustrates the first embodiment. A fuel cell apparatus includes a solid oxide fuel cell and is provided with a reformer 200, a combusting portion 300, a stack 400 of the fuel cell, a heat insulating wall 500 and a housing 600 which is made of metal (for example, carbon steel or alloy steel) and serves as a fixing portion. The reformer 200 reforms a fuel gas, that is, a hydrocarbon-based fuel gas, by using water vapor or steam so as to generate the anode gas that includes or contains hydrogen as a main constituent. The reformer 200 is arranged to extend in a lengthwise direction (a direction of an arrow L in Fig. 2). As illustrated in a plan view of Fig. 2, the reformer 200 includes a first reformer body 201 and a second reformer body 202 which are arranged to parallel to each other, and a communication portion 204 that includes a communication passage joining a second end portion 201f of the first reformer body 201 and a second end portion 202f of the second reformer body 202 to each other. As illustrated in Fig. 2, the reformer 200 has a three-sided rectangular shape in the plan view.

The first reformer body 201 includes an evaporating portion 210 for heating a reforming water so that water vapor is generated, and a first reforming portion 221 arranged to be adjacent to the evaporating portion 210 via a partition wall 212 having a gas permeability. The evaporating portion 210 is formed at a side at which a first end portion 200e (first end portion refers to the right side end portion illustrated in each of Figs. 1 and 2) of the reformer 200 is positioned, that is, in a vicinity of a side surface portion 601 of the housing 600. The second reformer body 202 includes a second reforming portion 222. Each of the first reforming portion 221 and the second reforming portion 222 accommodates therein a ceramic body having a particulate form or a honeycomb form and carrying a reforming catalyst, in a manner that the gas permeability is assured. A first end portion 201e of the first reformer body 201 and a first end portion 202e of the second reformer body 202 are not directly connected to each other (refer to Fig. 2). The first reforming portion 221 and the evaporating portion 210 are partitioned by the partition wall 212, which is provided inside the reformer 200 and includes the gas permeability, from each other, however, the first reforming portion 221 and the evaporating portion 210 are arranged to be adjacent to each other in an integrated manner to each other. The first reformer body 201 includes a first outer side surface 201 p which faces a first side surface heat insulating wall 505 of the heat insulating wall 500, a first inner side surface 201i which faces away from the first side surface heat insulating wall 505 of the heat insulating wall 500, that is, which faces an opposite direction to the first side surface heat insulating wall 505, a first bottom surface 201 b and a first ceiling surface 201 u. In a similar manner thereto, the second reformer body 202 includes a second outer side surface 202p which faces a second side surface heat insulating wall 506 of the heat insulating wall 500, a second inner side surface 202i which faces away from the second side surface heat insulating wall 506 of the heat insulating wall 500, that is, which faces an opposite direction to the second side surface heat insulating wall 506, a second bottom surface 202b and a second ceiling surface 202u.

As illustrated in Fig. 1, the combusting portion 300 forms or defines a combusting space 301 in which combustion flame that heats up the reformer 200 is generated. The combusting portion 300 is arranged below the reformer 200. The stack 400 is formed by plural fuel cells that are arranged parallel with one another in a direction in which the reformer 200 extends (the direction of the arrow L). The plural fuel cells are supplied with the anode gas and a cathode gas so as to generate electric power. The heat insulating wall 500, which is provided for a purpose of heat retaining, surrounds the evaporating portion 210, the reformer 200 and the stack 400 so that a power generation module 18 is formed. As illustrated in Fig. 1, the heat insulating wall 500 is made of fire-resistant material having a high heat insulation property.

As illustrated in Figs. 1 and 2, the heat insulating wall 500 includes a bottom heat insulating wall 501, a first end heat insulating wall 502 that is positioned at a side at which the first end portion 200e of the reformer 200 is positioned, a second end heat insulating wall 503 that is positioned at a side at which a second end portion 200f of the reformer 200 is positioned and a ceiling wall 504 that is positioned above the reformer 200. Further, as illustrated in Fig. 2, the heat insulating wall 500 includes the first side surface heat insulating wall 505 that is formed along a side surface of the first reforming portion 221 and the second side surface heat insulating wall 506 that is formed along a side surface of the second reforming portion 222. For convenience, Fig. 2 illustrates only a part of the housing 600, that is, the side surface portion 601.

The first end portion 200e of the reformer 200 in the lengthwise direction (the direction of the arrow L) is fixed at the side surface portion 601, which is the part of the housing 600, via welded portions 701, 704, 702 and 705. Specifically, as illustrated in Fig. 2, a water supply pipe 8w and a gas pipe 6w each of which is made of metal are fixedly connected to a first end portion 221e of the first reforming portion 221 in the lengthwise direction of the reformer 200 via the welded portion 701, that is, to a side at which the evaporating portion 210 adjacent to the first reforming portion 221 is positioned. As illustrated in Fig. 2, each of the water supply pipe 8w and the gas pipe 6w is fixedly connected to the side surface portion 601, which is the part of the housing 600, at the welded portion 702. Further, a sensor pipe 420, which is made of metal and into which a temperature sensor (thermo couple) for detecting internal temperature of the second reforming portion 222 is inserted, is connected to a first end portion 222e of the second reforming portion 222 at the welded portion 704. The sensor pipe 420 is connected to the side surface portion 601 of the housing 600 at the welded portion 705. As described above, the first end portion 200e of the reformer 200 in the lengthwise direction (the direction of the arrow L) is fixed to and restrained at a side wall, which is the part of the housing 600, at the welded portions 701, 702, 704 and 705. A fixture, including, for example, a mechanical fixture such as a bolt and a nut, may be used instead of the welded portions. As described above, penetrating members, that is, the pipes 8w, 6w, 420 and the sensor which penetrate the housing 600 (i.e., the fixing portion), are collected at a single surface, that is, at the side surface portion 601 of the housing 600. In other words, the penetrating members are collectively arranged at one side, in the lengthwise direction (the direction of the arrow L), at which the first end portion 200e of the reformer 200 is positioned.

The water supply pipe 8w is connected via a reforming water pump 80 to a tank 4 for storing the reforming water. When the reforming water pump 80 actuates, the reforming water stored in the tank 4 is supplied via the water supply pipe 8w to the evaporating portion 210 of the reformer 200, and the water vapor is generated. The gas pipe 6w is connected via a valve 69 to a gas source 63. When the valve 69 is opened, the fuel gas from the gas source 63 is supplied via the evaporating portion 210 to the first reforming portion 221, and then to the second reforming portion 222. Accordingly, the fuel gas is reformed with the water vapor and the anode gas that includes hydrogen as the main constituent is generated. The anode gas, which is generated at the reformer 200 and includes hydrogen as the main constituent, flows via a fluid passage to a gas distribution portion 403 below the stack 400, and is supplied to each anode of the stack 400. The cathode gas, which is constituted by air, is supplied via a fluid passage to each cathode of the stack 400. Accordingly, the stack 400 performs a power generation operation.

When the power generation operation is performed, an anode off-gas that is discharged from an upper portion of the anode of the stack 400 and a cathode off-gas that is discharged from an upper portion of the cathode of the stack 400 reach the combusting space 301 of the combusting portion 300, and the combustion flame is generated. The combustion flame is generated also at a first clearance space 535 (refer to Fig. 2) between the first side surface heat insulating wall 505 and the first reforming portion 221, and at a second clearance space 536 (refer to Fig. 2) between the second side surface heat insulating wall 506 and the second reforming portion 222. In this case, the reformer 200 is heated up not only from the bottom thereof but also from the side surfaces thereof, which contributes to an even-heating of the reformer 200, and thus unevenness in generation of the water vapor and in the reforming reaction is reduced. Due to the above-described combustion, the first reforming portion 221 and the second reforming portion 222 of the reformer 200 are heated up to a temperature that is appropriate for the reforming reaction. The evaporating portion 210 is heated up so that the water vapor is generated from the reforming water.

At a time of startup of the stack 400, the reformer 200 including the evaporating portion 210 is still at a low temperature, and the fuel gas supplied via the gas pipe 6w passes through the evaporating portion 210, the first reforming portion 221 and the second reforming portion 222 without being reformed. Then, the fuel gas is discharged to the combusting portion 300 via the anode of the stack 400, and is combusted with the air (the cathode gas) at the combusting space 301. Accordingly, the first reforming portion 221 and the second reforming portion 222, both of which constitute the reformer 200, are heated.

According to this embodiment, the first end portion 200e of the reformer 200 in the lengthwise direction (the direction of the arrow L) is supported by a supporting member 250 (refer to Fig. 1). The second end portion 200f of the reformer 200 in the lengthwise direction (the direction of the arrow L) is laid or placed on a placement surface 802 provided at the heat insulating wall 500. Specifically, the second end heat insulating wall 503 constituting the heat insulating wall 500 includes a thermal expansion absorbing portion 800 accommodating therein the second end portion 200f of the reformer 200 in the lengthwise direction. Accordingly, the reformer 200 is arranged in a substantially horizontal direction.

The thermal expansion absorbing portion 800 includes the placement surface 802 which is formed in a flat shape and which faces the second end portion 200f of the reformer 200 so that the thermal expansion absorbing portion 800 defines a thermal expansion absorbing space 801 formed in a recessed shape. That is, the thermal expansion absorbing portion 800 includes the placement surface 802 that faces upwardly, a down-facing restraining surface 803 and a lateral-facing restraining surface 804, for example, two lateral-facing restraining surfaces 804, 804. The placement surface 802 is formed in the flat shape extending in a horizontal direction, and a lower surface 200d of the second end portion 200f of the reformer 200 is placed on the placement surface 802 and supported thereat. The placement surface 802 is arranged to extend in the horizontal direction and defines the thermal expansion absorbing space 801 between an end surface of the second end portion 200f of the reformer 200 and an end surface 509 of the second end heat insulating wall 503. A length of the thermal expansion absorbing space 801 in the lengthwise direction (the direction of the arrow L) of the reformer 200 is indicated as ΔL. A relative displacement of the second end portion 200f of the reformer 200 in the lengthwise direction (the direction of the arrow L), which occurs in association with or as a result of a thermal expansion, is allowed by an amount that corresponds to the length ΔL. The reformer 200 is heated up and undergoes the thermal expansion as the power generation operation is performed, however, the reformer 200 is cooled down as the power generation operation is stopped. Thus, the relative displacement of the second end portion 200f of the reformer 200 in the lengthwise direction (the direction of the arrow L), which occurs in association with or as a result of a thermal contraction, is allowed by the amount that correspond to the length ΔL.

Fig. 1 is a vertical cross-sectional view cut in a height direction for schematically illustrating the fuel cell apparatus of this embodiment. As illustrated in Fig. 1, in the height direction of the reformer 200, the down-facing restraining surface 803 faces an upper surface 200u of the second end portion 200f of the reformer 200 and restrains or constrains the upper surface 200u of the second end portion 200f from being relatively displaced in the height direction. The down-facing restraining surface 803 and the placement surface 802 restrict the relative displacement of the second end portion 200f of the reformer 200 in the height direction (a direction of an arrow Z). The down-facing restraining surface 803 may face the upper surface 200u of the second end portion 200f of the reformer 200 while being in touch with the upper surface 200u, or the down-facing restraining surface 803 may face the upper surface 200u in a manner that a clearance is provided therebetween.

Fig. 2 is a cross-sectional view cut in the horizontal direction for schematically illustrating the fuel cell apparatus of this embodiment. As illustrated in Fig. 2, in the horizontal direction, the lateral-facing restraining surface 804 faces a side surface 200s of the second end portion 200f of the reformer 200 and restrains or constrains the side surface 200s of the second end portion 200f from being displaced in a lateral direction (a direction of an arrow Y). In this embodiment, the lateral-facing restraining surfaces 804, 804 face the respective side surfaces 200s, 200s of the second end portion 200f of the reformer 200 and restrain the respective side surfaces 200s, 200s of the second end portion 200f. The lateral-facing restraining surfaces 804, 804 face each other in a manner that the reformer 200 is arranged in the horizontal direction between the lateral-facing restraining surfaces 804, 804 so as to be sandwiched therebetween, so that the displacement of the second end portion 200f of the reformer 200 in the lateral direction (the direction of the arrow Y) is restricted. The lateral-facing restraining surface 804 may face the corresponding side surface 200s of the second end portion 200f of the reformer 200 in a manner that a clearance is provided therebetween. Consequently, the second end portion 200f of the reformer 200 is placed on the placement surface 802 of the heat insulating wall 500 so that the thermal expansion of the reformer 200 in the lengthwise direction thereof is absorbed in a case where the reformer 200 undergoes the thermal expansion in the lengthwise direction.

As described above, according to this embodiment, the first end portion 200e of the reformer 200 is fixed to the side surface portion 601, which is the part of the housing 600 serving as the fixing portion, at the welded portions 702 and 705 or by means of the fixture. Thus, for example, during an assembling operation or transportation of the fuel cell apparatus, the reformer 200 is restricted from moving unnecessarily, and thus is restricted from coming off and falling down. As described above, the first end portion 200e of the reformer 200 in the lengthwise direction (the direction of the arrow L) is connected to and fixed at the side surface portion 601 of the housing 600 at, for example, the welded portions 702 and 705 via the water supply pipe 8w, the gas pipe 6w and the sensor pipe 420, and is restrained by the part of the housing 600. As a result, in a case where the reformer 200 undergoes the thermal expansion in the lengthwise direction thereof (the direction of the arrow L), the displacement of the first end portion 200e of the reformer 200 in association with the thermal expansion is restrained. The reformer 200 has a configuration that is forked into two portions (a U-shaped configuration in a plan view), that is, a portion that includes the first reforming portion 221 and the evaporating portion 210, and a portion that includes the second reforming portion 222. However, because each of the evaporating portion 210, which is positioned at a side at which the first end portion 221e of the first reforming portion 221 is positioned, and the first end portion 222e of the second reforming portion 222 is fixedly welded to the housing 600 and restrained thereat, therefore balance of strength is maintained.

Further, according to this embodiment, as illustrated in Fig. 1, the second end portion 200f of the reformer 200 is placed on the placement surface 802, which is formed in the flat shape, of the second end heat insulating wall 503 of the heat insulating wall 500. Thus, in a case where the reformer 200 is heated to a high temperature by means of the combustion flame of the combusting portion 300 when the fuel cell apparatus performs the power generation operation, even in a case where the reformer 200 is relatively displaced in a direction of an arrow LA in the lengthwise direction (the direction of the arrow L) due to the thermal expansion, the relative displacement is absorbed. Thus, a load acting on the reformer 200 is reduced and stress concentration at the reformer 200 is restricted, which may enhance durability and extend a life of the reformer 200. The same is true to the thermal contraction that is associated with the cooling after the power generation operation. Even in a case where the reformer 200 is displaced due to the thermal contraction in the lengthwise direction (the direction of the arrow L), the relative displacement is absorbed by the placement surface 802.

The penetrating members including the water supply pipe 8w, the gas pipe 6w and the sensor pipe 420 are provided at the reformer 200. Each of the penetrating members and the side surface portion 601 of the housing 600 are joined to each other at the welded portions 702 and 705, however, the second end portion 200f of the reformer 200 is free and is not restrained from being displaced in the direction of the arrow L, which is the lengthwise direction of the reformer 200. Thus, even though the reformer 200, which is heated to the high temperature in accordance with the power generation operation of the fuel cell apparatus, thermally-expands in the lengthwise direction thereof (the direction of the arrow L), the second end portion 200f of the reformer 200 is free against the thermal expansion and against the subsequent thermal contraction because the aforementioned penetrating members are collected and arranged at the single surface, that is, at the side surface portion 601 of the housing 600. Therefore, unlike a known fuel cell apparatus, the fuel cell apparatus of this embodiment has an advantage that the stress on the reformer 200 may be ignored. Consequently, the penetrating members including the water supply pipe 8w, the gas pipe 6w and the sensor pipe 420 each of which is connected to the reformer 200 may be connected to the housing 600 (the fixing portion) in a manner that air tightness is ensured (for example, by means of welding), which leads to enhancement of reliability and efficiency of a power generation performance. Further, because the reformer 200 is retained and is restricted in an up-down direction at the placement surface 802 formed at the second end heat insulating wall 503 of the heat insulating wall 500 having the high heat insulation property, a heat dissipation from the stack 400 is restricted from increasing and a heat dissipation from the reformer 200 is restricted from increasing, and thus a reforming performance enhances (that is, a ratio of hydroconversion improves). Thus, the anode gas of a high quality is supplied to a power generation portion, and therefore a high efficiency in the power generation is advantageously ensured.

According to this embodiment, the first end portion 200e and the second end portion 200f of the reformer 200 are positioned at an identical height to each other. Accordingly, a central line Pm connecting the first end portion 200e and the second end portion 200f to each other extends along an imaginary horizontal line. According to circumstances, however, the reformer 200 may be arranged in a manner that a height of the second end portion 200f of the reformer 200 is slightly higher than a height of the first end portion 200e that is provided with the evaporating portion 210. For example, the central line Pm connecting the first end portion 200e and the second end portion 200f to each other may be inclined relative to the imaginary horizontal line by an angle θ (for example, any value in a range from 0.05 °C to 7 °C). By arranging the first end portion 200e (a side at which an inlet of the evaporating portion is arranged) to be lower than the second end portion 200f (a side at which the reformer is arranged), bumping, and leakage of the reforming catalyst are restricted from occurring, and thus degradation of the catalyst is restricted.

A second embodiment disclosed here will be explained hereunder. Fig. 3 schematically illustrates the second embodiment. The second embodiment basically includes the same configuration and effect as those of the aforementioned first embodiment. The second embodiment will be explained, focusing on configuration that is different from the first embodiment. Fig. 3 is a vertical cross-sectional view cut in the height direction for schematically illustrating the fuel cell apparatus of this embodiment. As illustrated in Fig. 3, the second end heat insulating wall 503 constituting the heat insulating wall 500 includes the thermal expansion absorbing portion 800 accommodating therein the second end portion 200f of the reformer 200. The thermal expansion absorbing portion 800 includes the thermal expansion absorbing space 801 accommodating therein the second end portion 200f of the reformer 200 in the lengthwise direction (the direction of the arrow L) and the placement surface 802 on which the second end portion 200f of the reformer 200 is placed. Further, the thermal expansion absorbing portion 800 of the second end heat insulating wall 503 includes the down-facing restraining surface 803 which is positioned close to and faces the upper surface 200u of the second end portion 200f of the reformer 200 in the lengthwise direction (the direction of the arrow L), and restrains the upper surface 200u of the second end portion 200f. Even in a case where the reformer 200 undergoes the relative displacement in the height direction (the direction of the arrow Z) due to the thermal expansion, the down-facing restraining surface 803 restrains the excessive relative displacement of the reformer 200. Further, as illustrated in Fig. 3, a first clearance 821 (a clearance width α1) is provided between the upper surface 200u of the second end portion 200f of the reformer 200 in the lengthwise direction and the down-facing restraining surface 803 of the heat insulating wall 500. The first clearance 821 is provided for absorbing the thermal expansion of the second end portion 200f of the reformer 200 in the height direction (the direction of the arrow Z) and the relative displacement associated with the thermal expansion. Thus, because the first clearance 821 is provided, the thermal expansion, in the height direction (the direction of the arrow Z), of the second end portion 200f of the reformer 200 and the relative displacement associated with the thermal expansion are allowed as long as within a range of the clearance width α1 of the first clearance 821. The same is true to the relative displacement associated with the thermal contraction. However, in a case where the reformer 200 is displaced in the height direction (the direction of the arrow Z) excessively due to the thermal expansion or the thermal contraction, the down-facing restraining surface 803 restrains the excessive relative displacement. Combustible gas may flow into the first clearance 821. Further, the combustible gas may flow into the thermal expansion absorbing space 801 via the first clearance 821 so that the combustion flame is formed. This contributes to the heating of the second end portion 200f, thereby contributing to reduction of unevenness of the reforming reaction.

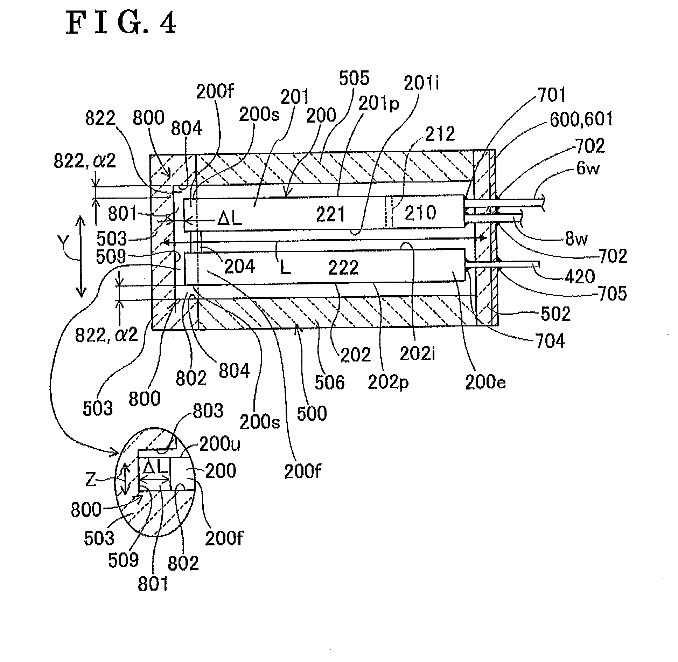

A third embodiment disclosed here will be explained hereunder. Fig. 4 schematically illustrates the third embodiment. The third embodiment basically includes the same configuration and effect as those of the aforementioned first embodiment. The third embodiment will be explained, focusing on configuration that is different from the first embodiment. Fig. 4 is a cross-sectional view cut in the horizontal direction (the direction of an arrow Y) for schematically illustrating the fuel cell apparatus of this embodiment. As illustrated in Fig. 4, the thermal expansion absorbing portion 800 provided at the second end heat insulating wall 503 constituting the heat insulating wall 500 includes the placement surface 802 which is formed in the flat shape and on which the lower surface of the second end portion 200f of the reformer 200 in the lengthwise direction (the direction of the arrow L) is placed. Further, the thermal expansion absorbing portion 800 of the second end heat insulating wall 503 includes the lateral-facing restraining surface 804, for example, two lateral-facing restraining surfaces 804, 804 which face the respective side surfaces 200s, 200s of the second end portion 200f of the reformer 200 and restrain the respective side surfaces 200s, 200s of the second end portion 200f. The lateral-facing restraining surfaces 804, 804 face each other in a manner that the lateral-facing restraining surfaces 804, 804 sandwich therebetween the second end portion 200f of the reformer 200. In a case where the reformer 200 is displaced in the horizontal direction (the direction of the arrow Y) because of the thermal expansion or the thermal contraction, the lateral-facing restraining surfaces 804, 804 restrain the relative displacement. As illustrated in Fig. 4, a second clearance 822 (a clearance width α2) is provided between each of the side surfaces 200s, 200s of the second end portion 200f of the reformer 200 and the corresponding lateral-facing restraining surface 804 of the heat insulating wall 500. The second clearance 822 is provided for absorbing the displacement of the second end portion 200f of the reformer 200 in the horizontal direction. Thus, because the second clearance 822 is provided, the relative displacement in accordance with the thermal expansion or the thermal contraction of the second end portion 200f of the reformer 200 is allowed as long as the relative displacement is within a range of the clearance width α2 of the second clearance 822. However, in a case where the second end portion 200f of the reformer 200 is displaced excessively in the horizontal direction (the direction of the arrow Y) due to the thermal expansion or the thermal contraction, the lateral-facing restraining surfaces 804, 804 restrict the excessive relative displacement.

Because the reforming reaction taking place at the reforming portion is an endoergic reaction, it is ideal that a heat retaining property of the reformer 200 is increased in order to assure that the reforming reaction is appropriately conducted at the reformer 200. As described above, the second clearance 822 is provided around each of the side surfaces 200s, 200s of the second end portion 200f of the reformer 200. Thus, the combustible gas, including, for example, the anode gas and the fuel gas at the combusting space 301 may flow into the second clearance 822. Further, the combustible gas may flow into the thermal expansion absorbing space 801 via the second clearance 822, so that the combustion flame is formed. Accordingly, a heating performance at the second end portion 200f of the reformer 200 is enhanced, and thus the reforming reaction at the reformer 200, at a side at which the second end portion 200f is positioned, is appropriately performed.

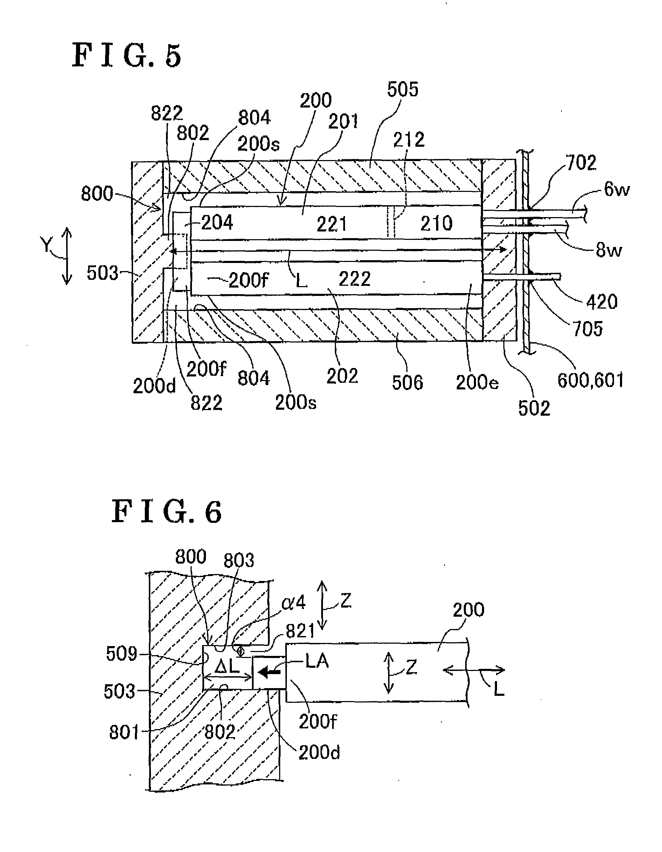

A fourth embodiment disclosed here will be explained hereunder. Fig. 5 schematically illustrates the fourth embodiment. The fourth embodiment basically includes the same configuration and effect as those of the aforementioned first embodiment. The fourth embodiment will be explained, focusing on configuration that is different from the first embodiment. Fig. 5 is a cross-sectional view cut in the horizontal direction for schematically illustrating the fuel cell apparatus of this embodiment. As illustrated in Fig. 5, the second end heat insulating wall 503 constituting the heat insulating wall 500 includes the thermal expansion absorbing portion 800 accommodating therein the second end portion 200f of the reformer 200 in the lengthwise direction (the direction of the arrow L). The thermal expansion absorbing portion 800 includes the placement surface 802 on which the lower surface 200d of the second end portion 200f of the reformer 200 in the lengthwise direction (the direction of the arrow L) is placed, and the lateral-facing restraining surface 804, for example, two lateral-facing restraining surfaces 804, 804 which face the respective side surfaces 200s, 200s of the second end portion 200f of the reformer 200 and restrain the respective side surfaces 200s, 200s. As illustrated in Fig. 5, the second clearance 822 is provided between each of the side surfaces 200s, 200s of the second end portion 200f of the reformer 200 and the corresponding lateral-facing restraining surface 804 of the heat insulating wall 500. The second clearance 822 absorbs the displacement of the second end portion 200f of the reformer 200 in the horizontal direction (the direction of the arrow Y).

Because the reforming reaction carried out at the reformer 200 is the endoergic reaction, it is ideal that the heat retaining property of the reformer 200 is increased in order to assure that the reforming reaction at the reformer 200 is uniform and appropriate. As illustrated in Fig. 5, the second clearance 822 is provided around each of the side surfaces 200s, 200s of the second end portion 200f of the reformer 200. Thus, the anode gas and the fuel gas that include combustibility at the combusting space 301 may flow into the second clearance 822, and the combustion flame is formed. Accordingly, a homogeneous heating performance at the second end portion 200f of the reformer 200 is enhanced, and thus the reforming reaction at the reformer 200, at the side at which the second end portion 200f is positioned, is appropriately performed.

A fifth embodiment disclosed here will be explained hereunder. Fig. 6 schematically illustrates the fifth embodiment. The fifth embodiment basically includes the same configuration and effect as those of the aforementioned first embodiment. The fifth embodiment will be explained, focusing on configuration that is different from the first embodiment. Fig. 6 illustrates a main portion of a vertical cross-sectional view cut in the height direction (the direction of the arrow Z) for schematically illustrating the fuel cell apparatus of this embodiment. As illustrated in Fig. 6, the length of the thermal expansion absorbing space 801 in the lengthwise direction of the reformer 200 (the direction of the arrow L) is indicated as the ΔL. The relative displacement of the second end portion 200f of the reformer 200 in the lengthwise direction (the direction of the arrow L) which is associated with the thermal expansion or the thermal contraction is allowed by the amount that corresponds to the length ΔL.

The first clearance 821 is provided between the reformer 200 and the down-facing restraining surface 803. The clearance width of the first clearance 821 is indicated as α4. A relationship ΔL>α4 is established. In this case, in a case where the reformer 200 is excessively displaced in the height direction (the direction of the arrow Z) due to the thermal expansion, the down-facing restraining surface 803 effectively restrains the excessive relative displacement. Further, because ΔL>α4 is established, a large thermal expansion of the reformer 200 in the lengthwise direction (the direction of the arrow L) is dealt with and absorbed. With regard to the first clearance 821, the combustible gas including, for example, the anode gas, may flow into the first clearance 821 and thus the combustion flame is formed. Further, the combustion flame is formed at the thermal expansion absorbing space 801 via the first clearance 821, which contributes to the reduction of the unevenness in the heating and the reforming at the reformer 200.

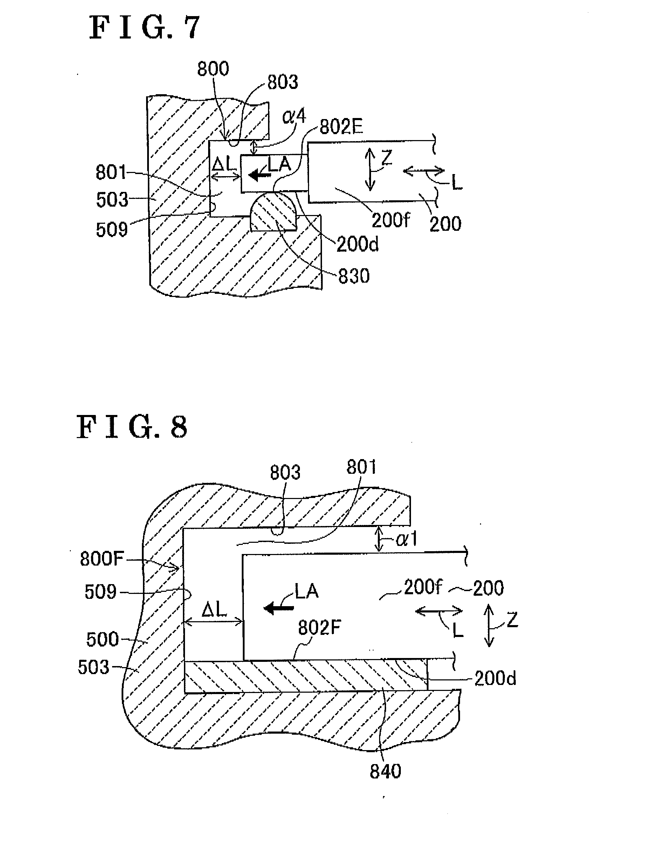

A sixth embodiment disclosed here will be explained hereunder. Fig. 7 schematically illustrates the sixth embodiment. The sixth embodiment basically includes the same configuration and effect as those of the aforementioned first embodiment. The sixth embodiment will be explained, focusing on configuration that is different from the first embodiment. The thermal expansion absorbing portion 800 provided at the second end heat insulating wall 503 constituting the heat insulating wall 500 includes a placement surface 802E on which the lower surface 200d of the second end portion 200f of the reformer 200 in the lengthwise direction (the direction of the arrow L) is placed. The placement surface 802E includes an arc-shaped convex surface. Specifically, a sub heat insulating member 830, which is made of heat insulating material having a high heat insulation property (including fire resisting material such as ceramics, or glass material which is high in a solid lubrication property) and which is supported at the second end heat insulating wall 503, includes the placement surface 802E constituted by the arc-shaped convex surface. The arc-shaped convex surface reduces a friction resistance, that is, the friction resistance between the second end portion 200f of the reformer 200 and the placement surface 802E including the arc-shaped convex surface. Thus, the displacement of the reformer 200 in the direction of the arrow L, which attributes to the thermal expansion or the thermal contraction, is appropriately allowed.

A seventh embodiment disclosed here will be explained hereunder. Fig. 8 schematically illustrates the seventh embodiment. The seventh embodiment basically includes the same configuration and effect as those of the aforementioned first embodiment. The seventh embodiment will be explained, focusing on configuration that is different from the first embodiment. As illustrated in Fig. 8, a sub heat insulating member 840 is arranged at a thermal expansion absorbing portion 800F of the second end heat insulating wall 503 constituting the heat insulating wall 500. The sub heat insulating member 840 includes a placement surface 802F formed into a flat surface and is made of material having a high solid lubrication property. Specifically, the sub heat insulating member 840 is made of glass material and maintains the high solid lubrication property even in a temperature range where the power generation operation is performed, and thus reduces the friction resistance. Accordingly, the displacement of the reformer 200 in the direction of the arrow L, which attributes to the thermal expansion or the thermal contraction, is appropriately allowed.

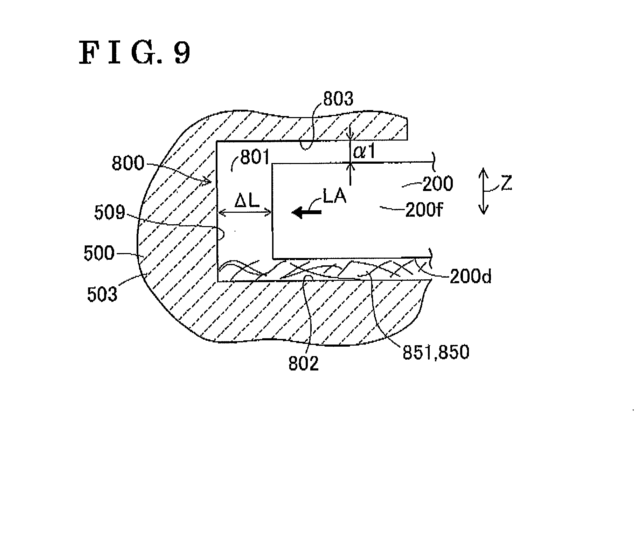

An eighth embodiment disclosed here will be explained hereunder. Fig. 9 schematically illustrates the eighth embodiment. The eighth embodiment basically includes the same configuration and effect as those of the aforementioned first embodiment. The eighth embodiment will be explained, focusing on configuration that is different from the first embodiment. As illustrated in Fig. 9, a fiber assembly 850 including plural fibers 851 constituted by fire resisting material (including, for example, glass material) is arranged at the placement surface 802 of the thermal expansion absorbing portion 800 of the second end heat insulating wall 503 constituting the heat insulating wall 500. Accordingly, the friction resistance between the placement surface 802 and the lower surface 200d of the second end portion 200f of the reformer 200 is reduced, and thus the displacement of the reformer 200 in the direction of the arrow L, which is caused by the thermal expansion or the thermal contraction, is appropriately allowed.

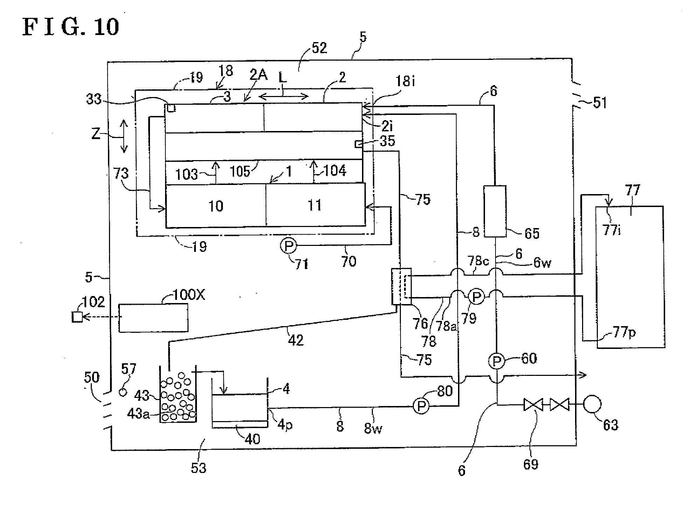

A first form of application will be explained with reference to Fig. 10. As illustrated in Fig. 10, the fuel cell apparatus includes a stack 1, an evaporating portion 2 evaporating water in liquid phase so as to generate the water vapor, a reforming portion 3 reforming fuel by using the water vapor generated at the evaporating portion 2 so as to form the anode gas, the tank 4 storing the water in the liquid phase which is to be supplied to the evaporating portion 2, a housing 18i, and a case 5 accommodating the stack 1, the evaporating portion 2, the reforming portion 3, the tank 4 and the housing 18i. The stack 1 includes an anode 10 and a cathode 11 sandwiching therebetween an ionic conductor. For example, a solid oxide fuel cell (SOFC; an operation temperature is equal to or greater than 400 °C, for example) is applicable as the stack 1. The reforming portion 3 is formed by a carrier such as ceramics on which the reforming catalyst is carried, and is arranged next to the evaporating portion 2. The reforming portion 3 and the evaporating portion 2 constitute a reformer 2A. The reformer 2A and the stack 1 are surrounded by a heat insulating wall 19 to thereby form the power generation module 18. In the power generation module 18, the combusting portion 105 is provided for heating the reforming portion 3 and the evaporating portion 2. An anode exhaust gas discharged from the anode 10 is supplied to the combusting portion 105 via a first fluid passage 103. A cathode exhaust gas discharged from the cathode 11 is supplied to the combusting portion 105 via a second fluid passage 104. At the time of startup, the combusting portion 105 burns or combusts a gas, that is, the gas before undergoing the reforming which is supplied from the anode 10, with the cathode gas supplied from the cathode 11, and heats up the evaporating portion 2 and the reforming portion 3.

During the power generating operation, at the combusting portion 105, the anode exhaust gas discharged from the anode 10 is burnt with the cathode exhaust gas discharged from the cathode 11, and the evaporating portion 2 and the reforming portion 3 are heated up by the combustion. The combusting portion 105 is provided with an exhaust combustion gas passage 75. An exhaust combustion gas at the combusting portion 105, which includes a gas after the combustion and an uncombusted gas, is discharged into air via the exhaust combustion gas passage 75. The reforming portion 3 is provided with a temperature sensor 33 for detecting temperature of the reforming portion 3. An ignition portion 35, which is a heater for starting a flame, is provided at the combusting portion 105. The ignition portion 35 of any type may be applicable as long as the ignition portion 35 ignites, that is, as long as the flame is started. The fuel cell apparatus is provided with an outside air temperature sensor 57 for detecting temperature of an outside air. Signals form the aforementioned temperature sensors 33, 57 are inputted to a control portion 100X. The control portion 100X outputs a signal for initiating warning to a warning device 102.

During the power generating operation, the reformer 2A is heated up inside the heat insulating wall 19 so as to be suitable for the reforming reaction. In the power generating operation, the evaporating portion 2 is heated up so as to heat the reforming water to obtain the water vapor. In a case where the stack 1 is SOFC, the anode exhaust gas discharged from the anode 10 and the cathode exhaust gas discharged from the cathode 11 are burnt at the combusting portion 105, so that the reforming portion 3 and the evaporating portion 2 are heated up at the same time inside the power generation module 18. As illustrated in Fig. 10, a gas passage 6 through which the gas from the gas source 63 is supplied to the reformer 2A includes a pump 60 and a desulfurizer 65. A cathode gas passage 70 is connected to the cathode 11 of the stack 1 so as to supply the cathode gas (air) to the cathode 11. A cathode pump 71 is provided at the cathode gas passage 70 so as to function as a supply source transmitting the cathode gas.

As illustrated in Fig. 10, the case 5 includes an intake port 50 and an exhaust port 51 that are in communication with the outside air. Further, the case 5 includes an upper accommodation chamber 52 serving as a first chamber, and a lower accommodation chamber 53 serving as a second chamber. The stack 1, the reforming portion 3, and the evaporating portion 2 constitute the power generation module 18 and are accommodated in the upper accommodation chamber 52, that is, at an upper side of the case 5. The tank 4 storing the water that is in the liquid phase and is reformed at the reforming portion 3 is accommodated in the lower accommodation chamber 53 of the case 5. A heating portion 40 such as an electric heater having a heating function is provided at the tank 4. The heating portion 40 formed by the electric heater, for example, heats up the water stored in the tank 4. In a case, for example, where an ambient temperature such as an outside air temperature is low, the water in the tank 4 is heated up by the heating portion 40 based on a command from the control portion 100X to thereby heat up the water in the tank 4 to be equal to or higher than a predetermined temperature to avoid freezing. As illustrated in Fig. 10, a water supply passage 8 serving as a conduit is provided within the case 5 so as to connect an outlet port 4p of the tank 4 in the lower accommodation chamber 53 to an inlet port 2i of the evaporating portion 2 in the upper accommodation chamber 52. The water supply passage 8 is a passage through which the water stored in the tank 4 is supplied from the tank 4 to the evaporating portion 2. A pump 80 functioning as a water supply source is provided at the water supply passage 8 so as to send the water in the tank 4 to the evaporating portion 2. The control portion 100X controls the pumps 80, 71, 60 and a hot water storage pump 79.

At the time of startup, when the pump 60 is driven, the gas flows through the gas passage 6 of the gas pipe 6w to the evaporating portion 2, the reforming portion 3, an anode gas passage 73, the anode 10 of the stack 1, the first fluid passage 103, and the combusting portion 105. In addition, the cathode gas (air) flows from the cathode pump 71 to the cathode gas passage 70, the cathode 11, the second fluid passage 104, and the combusting portion 105. When the ignition portion 35 is ignited in the aforementioned state, the combustion occurs at the combusting portion 105 so as to heat up the reforming portion 3 and the evaporating portion 2. In a case where the pump 80 is driven while the reforming portion 3 and the evaporating portion 2 are heated up, the water in the tank 4 is sent from the outlet port 4p of the tank 4 to the inlet port 2i of the evaporating portion 2 through the water supply passage 8. The water is then heated at the evaporating portion 2 to form the water vapor. The water vapor moves to the reforming portion 3 together with the gas supplied from the gas passage 6. The gas is reformed by the water vapor at the reforming portion 3 so as to form the anode gas (the hydrogen containing gas). The anode gas is supplied to the anode 10 of the stack 1 via the anode gas passage 73. Further, the cathode gas (the oxygen containing gas, i.e., air in the case 5) is supplied to the cathode 11 of the stack 1 via the cathode gas passage 70. As a result, the stack 1 generates an electric power. The anode off-gas discharged from the anode 10 and the cathode off-gas discharged from the cathode 11 flow through the first and second fluid passages 103 and 104 respectively and reach the combusting portion 105 so as to be burnt at the combusting portion 105. The resulting high temperature exhaust gas is emitted to an outside of the case 5 via the exhaust combustion gas passage 75.

When the pump 80 is driven while the above-described system is operating the power generation operation, the water in the tank 4 is sent from the outlet port 4p of the tank 4 to the inlet port 2i of the evaporating portion 2 through the water supply passage 8 of the water supply pipe 8w. The water is then heated at the evaporating portion 2 to form the water vapor. The water vapor moves to the reforming portion 3 together with the gas supplied from the gas passage 6. The fuel is reformed by the water vapor at the reforming portion 3 to form the anode gas (the hydrogen containing gas). In a case where the fuel is a methane fuel, the generation of the anode gas by the reforming using the water vapor is considered to occur on a basis of a formula (1) below. At this time, however, the fuel is not limited to the methane fuel.

(1) CH₄ + 2H₂O → 4H₂ + CO₂ CH₄ + H₂O → 3H₂ + CO

The generated anode gas is supplied via the anode gas passage 73 to the anode 10 of the stack 1. Further, the cathode gas (the oxygen containing gas, i.e., the air in the case 5) is supplied via the cathode gas passage 70 to the cathode 11 of the stack 1. A power generation reaction occurs at the stack 1 in the aforementioned state. A high temperature exhaust gas discharged at the stack 1 is discharged to the outside of the case 5 via the exhaust combustion gas passage 75.

A heat exchanger 76 having a condensation function is provided at the exhaust combustion gas passage 75. A hot water storage passage 78 is connected to a hot water storage tank 77. The hot water storage pump 79 is provided at the hot water storage passage 78. The hot water storage passage 78 includes an outward passage 78a and an inward passage 78c. A low temperature water in the hot water storage tank 77 is discharged from a discharge port 77p of the hot water storage tank 77 by the driving of the hot water storage pump 79 so as to flow through the outward passage 78a to the heat exchanger 76 and is heated thereat. The hot water heated at the heat exchanger 76 is returned to the hot water storage tank 77 from a return port 77i by flowing through the inward passage 78c. Accordingly, the hot water is obtained at the hot water storage tank 77. The water vapor included in the aforementioned exhaust gas discharged at the stack 1 is condensed at the heat exchanger 76 to form the condensed water. The condensed water is supplied to a water purifier 43 due to, for example, the effect of gravity, via a condensed water passage 42 extending from the heat exchanger 76. Because the water purifier 43 includes a water purification agent 43a such as an ion-exchange resin, an impure substance contained in the condensed water is removed. The water where the impure substance is removed moves to the tank 4 and is stored thereat. When the pump 80 is driven, the water in the tank 4 is supplied to the evaporating portion 2 at the high temperature via the water supply passage 8, and is then supplied to the reforming portion 3 after the water turns to the water vapor at the evaporating portion 2. The water (water vapor) is consumed at the reforming portion 3 in the reforming reaction for reforming the fuel. The reforming portion 3 includes the configuration according to the aforementioned embodiments disclosed here and is configured to absorb the thermal expansion in the lengthwise direction of the reforming portion 3.

The aforementioned embodiments are not limited to the configurations which are described above and illustrated in the accompanying drawings, and are not limited to the first form of application. The fuel cell is not limited to the solid oxide fuel cell, and may be, for example, a solid polymer electrolyte fuel cell, a phosphoric acid fuel cell or a molten carbonate fuel cell in some cases, The "fuel (fuel gas)" is not limited to a specific type of fuel, and city gas, propane gas, biogas, LPG (liquefied petroleum gas), CNG (compressed natural gas) or kerosene may be used.

## Claims

1. A fuel cell apparatus, comprising:
a reformer (200) for generating an anode gas including hydrogen by reforming a fuel gas by means of water vapor generated at an evaporating portion (210), the reformer (200) being arranged to extend in a lengthwise direction thereof;
a combusting portion (300) forming a combusting space (301) in which combustion flame heating the reformer (200) is generated;
a stack (400) supplied with the anode gas and a cathode gas to generate electric power;
a heat insulating wall (500) surrounding the reformer (200) and the stack (400); and
a fixing portion (600) arranged along the heat insulating wall (500), wherein
a first end portion (200e) of the reformer (200) in the lengthwise direction thereof is fixed to a part (601) of the fixing portion (600) at a welded portion (701, 702, 704, 705) or by means of a fixture so that a displacement of the first end portion (200e) which occurs in association with a thermal expansion of the reformer (200) in the lengthwise direction is restrained,
**characterized in that**
a second end portion (200f) of the reformer (200) in the lengthwise direction (L) thereof is placed at a placement surface (802, 802E, 802F) of the heat insulating wall (500) in a manner that the second end portion (200f) is relatively displaceable in the lengthwise direction (L) of the reformer (200) in association with the thermal expansion,
the heat insulating wall (500) faces, in a horizontal direction (Y) perpendicular to the lengthwise direction (L) of the reformer (200), a side surface (200s) of the second end portion (200f) of the reformer (200) in the lengthwise direction (L) thereof and the heat insulating wall (500) includes a lateral-facing restraining surface (804) for restraining the side surface (200s) of the second end portion (200f) in the horizontal direction (Y), and
a first clearance (822) is provided between the side surface (200s) of the second end portion (200f) of the reformer (200) and the lateral-facing restraining surface (804) of the heat insulating wall (500) in the horizontal direction (Y), and the first clearance (822) is configured to absorb a displacement of the second end portion (200f) of the reformer (200) in the horizontal direction (Y).

2. The fuel cell apparatus according to claim 1, wherein the heat insulating wall (500) faces, in a height direction (Z) of the reformer (200), an upper surface (200u) of the second end portion (200f) of the reformer (200) in the lengthwise direction (L) thereof and the heat insulating wall (500) includes a down-facing restraining surface (803) for restraining the upper surface (200u) of the second end portion (200f) in the height direction (Z).

3. The fuel cell apparatus according to claim 2, wherein a second clearance (821) is provided between the upper surface (200u) of the second end portion (200f) of the reformer (200) and the down-facing restraining surface (803) of the heat insulating wall (500) in the height direction (Z) of the reformer (200), and the second clearance (821) is configured to absorb a displacement of the second end portion (200f) of the reformer (200) in the height direction (Z) which occurs in accordance with the thermal expansion of the second end portion (200f) of the reformer (200).

## Patentansprüche

1. Brennstoffzellenvorrichtung mit:
einem Reformer (200) zum Erzeugen eines Anodengases, einschließlich Wasserstoff, mittels Reformierens eines Brennstoffgases mittels Wasserdampf, der an einem Verdampfungsabschnitt (210) erzeugt wird, wobei der Reformer (200) angeordnet ist, um sich in einer Längsrichtung davon zu erstrecken;
einem Verbrennungsabschnitt (300), der einen Verbrennungsraum (301) ausbildet, in dem eine Verbrennungsflamme, die den Reformer (200) heizt, erzeugt wird;
einem Stapel (400), der mit dem Anodengas und einem Katodengas versorgt wird, um elektrische Energie zu erzeugen;
einer Wärmeisolierwand (500), die den Reformer (200) und den Stapel (400) umgibt; und
einem Befestigungsabschnitt (600), der entlang der Wärmeisolierwand (500) angeordnet ist, wobei
ein erster Endabschnitt (200e) des Reformers (200) in der Längsrichtung davon an einem Teil (601) des Befestigungsabschnitts (600) an einem geschweißten Abschnitt (701, 702, 704, 705) oder mittels einer Befestigung befestigt ist, sodass eine Verschiebung des ersten Endabschnitts (200e), welche in Verbindung mit einer thermischen Ausdehnung des Reformers (200) in der Längsrichtung auftritt, beschränkt ist,
**dadurch gekennzeichnet, dass**
ein zweiter Endabschnitt (200f) des Reformers (200) in der Längsrichtung (L) davon an einer Platzierungsfläche (802, 802E, 802F) der Wärmeisolierwand (500) auf eine Weise platziert ist, dass der zweite Endabschnitt (200f) in der Längsrichtung (L) des Reformers (200) in Verbindung mit der thermischen Ausdehnung relativ verschiebbar ist,
die Wärmeisolierwand (500) in einer horizontalen Richtung (Y) senkrecht zu der Längsrichtung (L) des Reformers (200) einer Seitenfläche (200s) des zweiten Endabschnitts (200f) des Reformers (200) in der Längsrichtung (L) davon zugewandt ist und die Wärmeisolierwand (500) eine seitlich zugewandte Beschränkungsfläche (804) zum Beschränken der Seitenfläche (200s) des zweiten Endabschnitts (200f) in der horizontalen Richtung (Y) umfasst, und
ein erster Abstand (822) zwischen der Seitenfläche (200s) des zweiten Endabschnitts (200f) des Reformers (200) und der seitlich zugewandten Beschränkungsfläche (804) der Wärmeisolierwand (500) in der horizontalen Richtung (Y) vorgesehen ist und der erste Abstand (822) gestaltet ist, um eine Verschiebung des zweiten Endabschnitts (200f) des Reformers (200) in der horizontalen Richtung (Y) zu absorbieren.

2. Brennstoffzellenvorrichtung nach Anspruch 1, wobei die Wärmeisolierwand (500) in einer Höhenrichtung (Z) des Reformers (200) einer oberen Fläche (200u) des zweiten Endabschnitts (200f) des Reformers (200) in der Längsrichtung (L) davon zugewandt ist und die Wärmeisolierwand (500) eine nach unten zugewandte Beschränkungsfläche (803) zum Beschränken der oberen Fläche (200u) des zweiten Endabschnitts (200f) in der Höhenrichtung (Z) umfasst.

3. Brennstoffzellenvorrichtung nach Anspruch 2, wobei ein zweiter Abstand (821) zwischen der oberen Fläche (200u) des zweiten Endabschnitts (200f) des Reformers (200) und der nach unten zugewandten Beschränkungsfläche (803) der Wärmeisolierwand (500) in der Höhenrichtung (Z) des Reformers (200) vorgesehen ist und der zweite Abstand (821) gestaltet ist, eine Verschiebung des zweiten Endabschnitts (200f) des Reformers (200) in der Höhenrichtung (Z) zu absorbieren, welche in Verbindung mit einer thermischen Ausdehnung des zweiten Endabschnitts (200f) des Reformers (200) auftritt.

## Revendications

1. Appareil de pile à combustible, comprenant :
un reformeur (200) pour générer un gaz anodique comportant de l'hydrogène par reformage d'un gaz combustible au moyen de la vapeur d'eau générée au niveau d'une partie d'évaporation (210), le reformeur (200) étant agencé pour s'étendre dans une direction de la longueur de celui-ci ;
une partie de combustion (300) formant un espace de combustion (301) dans lequel une flamme de combustion chauffant le reformeur (200) est générée ;
une empilement (400) fourni avec le gaz anodique et un gaz cathodique pour générer de l'énergie électrique ;
une paroi d'isolation thermique (500) entourant le reformeur (200) et l'empilement (400) ; et
une partie de fixation (600) agencée le long de la paroi d'isolation thermique (500), où
une première partie d'extrémité (200e) du reformeur (200) dans la direction de la longueur de celui-ci est fixée à une partie (601) de la partie de fixation (600) au niveau d'une partie soudée (701, 702, 704, 705) ou au moyen d'un élément de fixation de sorte qu'un déplacement de la première partie d'extrémité (200e) qui se produit en association avec une dilatation thermique du reformeur (200) dans la direction de la longueur soit limité, **caractérisé en ce que**
une deuxième partie d'extrémité (200f) du reformeur (200) dans la direction de la longueur (L) de celui-ci est placée au niveau d'une surface de placement (802, 802E, 802F) de la paroi d'isolation thermique (500) de façon que la deuxième partie d'extrémité (200f) soit relativement mobile dans la direction de la longueur (L) du reformeur (200) en association avec la dilatation thermique,
la paroi d'isolation thermique (500) fait face, dans une direction horizontale (Y) perpendiculaire à la direction de la longueur (L) du reformeur (200), à une surface latérale (200s) de la deuxième partie d'extrémité (200f) du reformeur (200) dans la direction de la longueur (L) de celui-ci et la paroi d'isolation thermique (500) comporte une surface de retenue orientée latéralement (804) pour retenir la surface latérale (200s) de la deuxième partie d'extrémité (200f) dans la direction horizontale (Y), et
un premier jeu (822) est prévu entre la surface latérale (200s) de la deuxième partie d'extrémité (200f) du reformeur (200) et la surface de retenue orientée latéralement (804) de la paroi d'isolation thermique (500) dans la direction horizontale (Y), et le premier jeu (822) est configuré pour absorber un déplacement de la deuxième partie d'extrémité (200f) du reformeur (200) dans la direction horizontale (Y).

2. Appareil de pile à combustible selon la revendication 1, dans lequel la paroi d'isolation thermique (500) fait face, dans une direction de la hauteur (Z) du reformeur (200), à une surface supérieure (200u) de la deuxième partie d'extrémité (200f) du reformeur (200) dans la direction de la longueur (L) de celui-ci et la paroi d'isolation thermique (500) comporte une surface de retenue orientée vers le bas (803) pour retenir la surface supérieure (200u) de la deuxième partie d'extrémité (200f) dans la direction de la hauteur (Z).

3. Appareil de pile à combustible selon la revendication 2, dans lequel un deuxième jeu (821) est prévu entre la surface supérieure (200u) de la deuxième partie d'extrémité (200f) du reformeur (200) et la surface de retenue orientée vers le bas (803) de la paroi d'isolation thermique (500) dans la direction de la hauteur (Z) du reformeur (200), et le deuxième jeu (821) est configuré pour absorber un déplacement de la deuxième partie d'extrémité (200f) du reformeur (200) dans la direction de la hauteur (Z) qui se produit conformément à la dilatation thermique de la deuxième partie d'extrémité (200f) du reformeur (200).
